# EUROPÄISCHE PATENTANMELDUNG

(11) **EP 1 729 208 A2**
(43) Veröffentlichungstag der Anmeldung: **06.12.2006**
(21) Anmeldenummer: 06011363.6
(22) Anmeldetag: 01.06.2006
(51) Int. Cl.: G06F 3/041

(54) **Einrichtung zur manuellen Eingabe und/oder Anzeige von Daten**

(30) Priorität: 02.06.2005 DE 10525301
(71) Anmelder: Preh KeyTec GmbH, 97616 Bad Neustadt a.d. Saale (DE)
(72) Erfinder: Hochgesang, Gerhard, 97616 Bad Neustadt a.d. Saale (DE)
(74) Vertreter: Thul, Hermann

(57) **Zusammenfassung**

Die Erfindung betrifft eine Einrichtung zur manuellen Eingabe und/oder Anzeige von Daten, mit einem Gehäuse (15) und einem in dem Gehäuse (15) aufgenommenen berührungssensitiven Bildschirm (11), der mit einer die eingegebenen datenverarbeitenden Rechnereinheit verbunden ist, wobei der Bildschirm (11) bewegbar (P) im Gehäuse (15) aufgenommen ist.

## Beschreibung

Die Erfindung betrifft eine Einrichtung zur manuellen Eingabe und/oder Anzeige von Daten, mit einem Gehäuse und einem in dem Gehäuse aufgenommenen berührungssensitiven Bildschirm, der mit einer die eingegebenen Daten verarbeitenden Rechnereinheit verbunden ist.

Die Eingabe von Daten, wie beispielsweise nummerische, alphanummerische oder produktspezifische Daten erfolgt heutzutage zumeist über Tastaturen oder berührungssensitive Bildschirme, sogenannte Touch-Screens. Ein Bereich in dem häufig und in wiederkehrendem Maße Daten und Produkte in Datenverarbeitungsanlagen eingegeben werden, sind Kassen von z. B. Einkaufsmärkten oder Tankstellen. An diesen Verkaufsstellen, sogenannten Point of Sailes (POS) erfolgt die Dateneingabe zumeist über Langhub-Tastaturen oder mittels Touch-Screens mit resitiv oder kapazitiv arbeitenden Oberflächen. Bekannt sind ebenfalls Kombinationen aus Touch-Screens und Tastaturen. Touch-Screens werden bevorzugt dort eingesetzt, wo z. B. häufige Produktwechsel stattfinden oder wenn Produkte oder Summen mit den dazugehörigen Waren unmittelbar neben den Eingabefeldern errechnet und angezeigt werden sollen. Vorteilhaft ist hierbei, dass Änderungen oder ein Abgleich von Produkten oder Daten über die Software erfolgen kann, ohne dass ein manueller Eingriff in die Eingabesysteme notwendig ist.

Um diesen Vorteil einer programmierbaren Anzeige auch im Tastaturbereich nutzbar zu machen, ist es aus dem deutschen Gebrauchsmuster DE 89 09 673 bekannt, einen Touch-Screen in eine Tastatur zu integrieren. Beschrieben wird eine Anzeige/Tastatureinheit zur Steuerung von Geräten mit einem Anzeigefeld und mindestens einem Tastenfeld, wobei als Anzeigefeld ein berührungsempfindlicher Touch-Screen in das Gehäuse der Tastatur integrierbar ist. Durch ein Umprogrammieren, das heißt durch Änderung der Software, können also bei einer derartigen Anzeige/Tastatureinheit jederzeit die Funktionen geändert oder auch erweitert und damit den jeweils gewünschten Verhältnissen angepaßt werden.

Darüber hinaus ist es aus der DE 198 20 797 A1 bekannt, Tasten mit veränderbaren Anzeigen zu versehen. Mittels der steuerbaren Anzeigeeinheiten als integrierte Bestandteile der Tasten ist es hierbei möglich, die Anzahl an notwendigen Tasten zu reduzieren, da je nach ausgewähltem Menü in der Steuerung die Taste mit unterschiedlichen Anzeigen versehen werden kann. Beschrieben wird hierin auch die Verwendung einer Anzeigeeinheit als Flüssigkristallanzeigeeinheit.

Die bekannten und dargestellten Systeme zeigen jedoch in der Praxis wesentliche Nachteile auf. So ist die Lage und Position der Systeme nicht auf die Feinmotorik der Bediener abstimmbar, wodurch die Geschwindigkeit der Dateneingabe begrenzt wird. Darüber hinaus besitzen die heutzutage eingesetzten berührungssensitiven Systeme in ihrer Betätigungscharakteristik einen starren Anschlag. Diese starre Haptik des Betätigungsablaufs reduziert extrem die Eingabegeschwindigkeit, da dem Bediener die haptische Rückmeldung fehlt, so dass die Anzahl der Fehler bei der Dateneingabe erhöht wird.

Aufgabe der Erfindung ist es, eine Einrichtung zur manuellen Eingabe und/oder Anzeige zu entwickeln, die dem Bediener eine haptische Rückmeldung ermöglicht und somit die Nachteile aus dem Stand der Technik eliminiert. Darüber hinaus soll die Einrichtung mit einfachsten konstruktiven Mitteln und kostengünstig realisierbar sein.

Die Aufgabe der Erfindung wird dadurch gelöst, dass ein berührungssensitiver Bildschirm in einem Gehäuse bewegbar aufgenommen ist. Durch die erfindungsgemäße Ausgestaltung der Einrichtung zur Eingabe von Daten, ist nun die Möglichkeit geschaffen, dem Bediener eines berührungssensitiven Bildschirms eine Haptik in Form einer üblichen Eingabe, wie der Bediener sie beispielsweise über eine Tastatur erfährt, bereitzustellen. Der Bediener muß nun nicht länger auf dem Bildschirm oder unmittelbar auf dem Touch-Screen die Eingabe visuell abfragen, sondern erfährt eine Bestätigung unmittelbar über die Haptik des sich bewegenden Bildschirms. Dadurch wird einerseits die Geschwindigkeit der Eingabe wesentlich beschleunigt und die Anzahl der Fehler bei der Eingabe wird deutlich reduziert. Je nach benötigter Anzahl von Warengruppen oder in Abhängigkeit der Größe des Gehäuses ist es hierbei natürlich vorstellbar, auch mehrere berührungssensitive Bildschirme im Gehäuse aufzunehmen.

Nachfolgend wird die Erfindung anhand von Zeichnungen näher erläutert. Hierbei zeigt
- Figur 1: eine dreidimensionale Ansicht einer Langhub-Tastatur in einer handelsüblichen Ausführung,
- Figur 2: eine Tastatur mit integriertem berührungssensitiven Bildschirm und
- Figur 3: einen Schnitt durch eine erfindungsgemäße Tastatur gemäß dem Schnitt III-III in Figur 2.

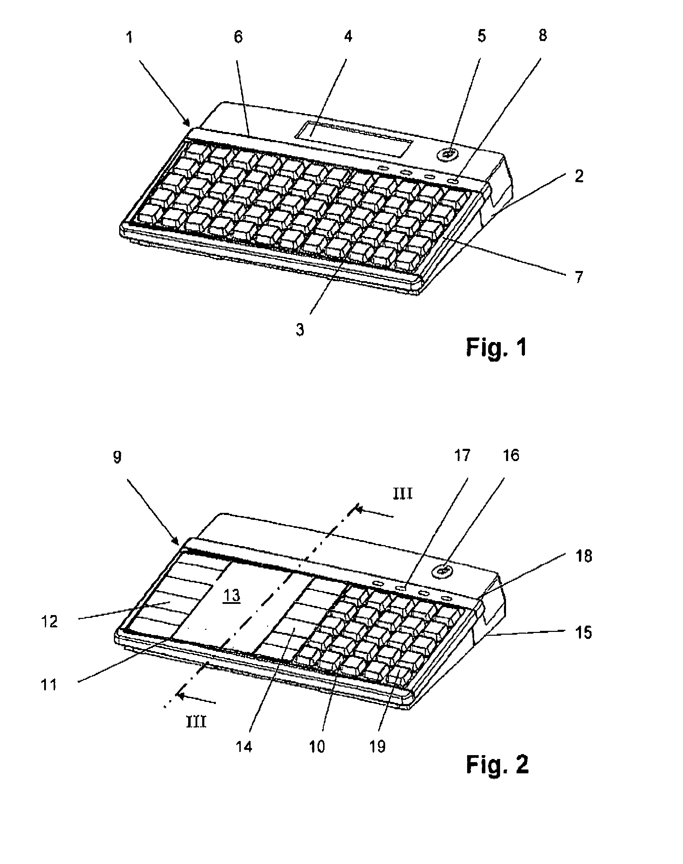

In der Figur 1 ist eine dreidimensionale Ansicht auf eine Langhub-Tastatur 1 in einer dreidimensionalen Ansicht gemäß dem Stand der Technik wiedergeben. Die Langhub-Tastatur besteht aus einem Gehäuse 2, in dem im vorderen oberen Bereich ein Tastenfeld 3 und im hinteren oberen Bereich ein LCD-Display 4 angeordnet ist. Im hinteren oberen Bereich ist zusätzlich ein Schlüsselschalter 5 in das Gehäuse integriert. Zwischen dem vorderen und hinteren oberen Bereich der Tastatur ist eine derartige Tastatur zum Beispiel mit einem Magnetkartenleser 6 ausführbar. Unmittelbar oberhalb des Tastenfeldes 3 sind in die Umrandung 7 des Tastenfeldes 3 vier Leuchtmittelanzeigen 8 vorgesehen.

Mittels des Schlüsselschalters 5 wird die Tastatur 1 in Betrieb genommen, das heißt unter Spannung gesetzt. Je nach eingestelltem Betriebsmodus leuchten hiernach unterschiedliche Leuchtmittelanzeigen 8 auf, die den Betriebsmodus wiedergeben oder, wie allgemein bekannt, zum Beispiel eine Umschaltfunktion in der Tastatur 1 anzeigen. Bekannt ist es, das LCD-Display 4 als Anzeigedisplay 4 auszuführen, um damit dem Bediener die Eingabe zu bestätigen oder ausgewählte Menüs oder Warengruppen anzuzeigen. Es ist ebenfalls bekannt, derartige in die Tastatur 1 integrierte Displays 4 als berührungssensitive Bildschirme auszuführen.

In der Figur 2 ist eine prinzipiell gleichartig aufgebaute Tastatur 9 in einer dreidimensionalen Vorderansicht wiedergegeben. Hierbei wird im vorderen Bereich des Tastenfeldes 10 ein Bereich, der ebenfalls zur Eingabe von Daten dient, aus einem berührungssensitiven Bildschirm 11 gebildet. Der berührungssensitive Bildschirm 11 ist in dieser Ausführung größer als das Tastenfeld 10. Der berührungssensitive Bildschirm 11 ist hierbei wiederum in unterschiedliche Eingabebereiche 12, 13, 14 eingeteilt. Derartige Bereiche 12, 13, 14 sind nicht fest vorgegeben, sondern werden mittels einer Software generiert und können entsprechend mit beliebigen Funktionen hinterlegt werden. So ist es beispielsweise vorstellbar, die Bereiche 12, 14 als Eingabebereiche auszuführen und den Bereich 13 als Anzeigebereich, in dem beispielsweise Summen oder Produkte dargestellt werden, auszuführen. Im Weiteren besitzt die erfindungsgemäße Tastatur den Aufbau der in Figur 1 beschriebenen standardmäßigen Tastatur 1. So ist im oberen hinteren Bereich des Gehäuses 15 ein Schlüsselschalter 16 angeordnet. Die Tastatur 9 besitzt ebenso die Betriebsartanzeige 17 und den Magnetkartenschlitz 18. Es wird hierbei ausdrücklich darauf hingewiesen, dass es sich bei den dargestellten Figuren lediglich um ein Ausführungsbeispiel handelt. Erfindungsgemäß ist es vorstellbar, den berührungssensitiven Bildschirm 11 ausschließlich, das heißt ohne Tastenfeld, in das Gehäuse 15 zu integrieren.

Werden nun über den berührungssensitiven Bildschirm 11, der auch Touch-Screen 11 genannt wird. Daten eingegeben, so ist der Touch-Screen 11 in der Lage, sich in Richtung des Gehäuses zu bewegen. Diese Bewegung entspricht im Wesentlichen dem Hub einer Taste 19 des Tastenfeldes 10 und gibt dem Bediener die Möglichkeit, die Eingabe haptisch zu erfassen. Dies bildet einen wesentlichen Vorteil der Erfindung, da der Bediener der Tastatur 9 nicht darauf angewiesen ist, sich die Eingabe über den Touch-Screen 11 visuell bestätigen zu lassen. Eine Eingabe kann somit wesentlich schneller und somit wirtschaftlicher erfolgen. Gleichzeitig werden hierdurch die Fehler bei der Eingabe der Daten reduziert, da dem Bediener vermittelt wird, dass die Daten eingegeben sind.

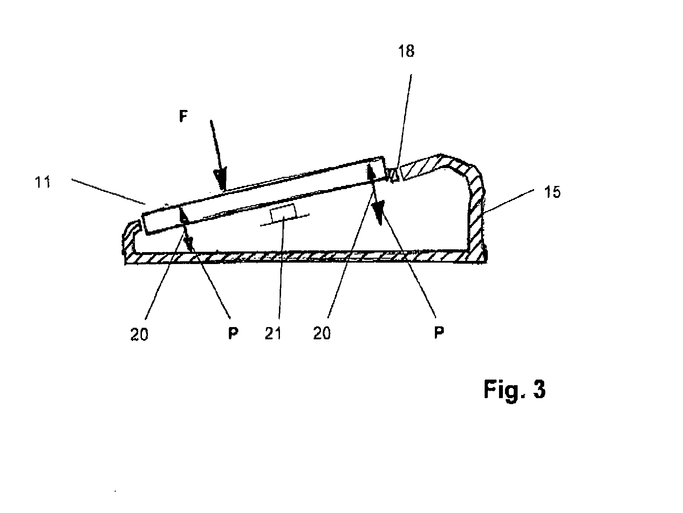

In der Figur 3 ist ein Schnitt durch die Figur 2 gemäß der Ansicht III-III in prinzipieller Weise wiedergegeben. Die Figur 3 zeigt einen Schnitt durch das Gehäuse 15 und die Lage und Anordnung des Touch-Screens 11 im Gehäuse 15. Darüber hinaus ist der Magnetkartenschlitz 18 zu erkennen.

In einer bevorzugten Ausführungsvariante der Erfindung wird der Bildschirm mittels einer Parallelführung 20 im Gehäuse 15 geführt. Eine derartige Parallelführung 20 für den Bildschirm 11 ist beispielsweise aus der DE 33 29 698 bekannt, auf die hier ausdrücklich Bezug genommen wird. da dies eine bevorzugte Ausführungsform für eine Parallelführung 20 ist. Mittels einer Parallelführung ist der Bildschirm 11 in der Lage, auch bei einer außermittigen Kontaktierung, wie dies mit dem Pfeil F dargestellt ist, sich parallel im Gehäuse 15 in Richtung der Pfeile P mittels der Parallelführungen 20 zu bewegen.

Erfindungsgemäß ist es darüber hinaus mittels der Parallelführung 20 möglich, unterhalb des Bildschirms 11 an beliebigen Positionen ein Schaltelement 21 anzuordnen, das durch die Bewegung des Bildschirms 11 unmittelbar oder mittelbar, zum Beispiel über die Parallelführung 20 oder Führungselemente in der Parallelführung 20, kontaktiert wird.

Wird hingegen die Schaltfunktion nicht benötigt, oder dient der Bildschirm 11 in einem Betriebsmodus lediglich zur Anzeige, so ist es erfindungsgemäß vorstellbar, die Bewegung des Bildschirms zu sperren, so dass der Bildschirm starr im Gehäuse 15 gehalten ist. Hierdurch wird dem Bediener unmittelbar vermittelt, dass eine Eingabe derzeit nicht möglich ist, womit der Bediener gleichzeitig ein haptisches Warnsignal erfährt.

Erfindungsgemäß ist es vorstellbar, ein Gehäuse 15 auch mit mehreren Bildschirmen 11 auszuführen und diese ebenfalls bewegbar im Gehäuse 15 anzuordnen. Dies kann zum Beispiel dann der Fall sein, wenn das Gehäuse 15 aufgrund seiner Dimension einen einteiligen Bildschirm 11 nicht möglich macht oder wenn völlig unterschiedliche Eingaben oder Positionen der Eingabe im Gehäuse 15 gefordert werden. Wichtig hierbei ist, dass es sich um großflächige oder größere Bildschirme 11 handelt, die nicht wie bei bekannten Tasten mit LCD-Anzeige lediglich geringe Menüvarianten oder lediglich unterschiedliche Symbole anzeigen können. Ein weiterer Vorteil hierbei ist, dass die Belegung des Bildschirms 11 nicht fest vorgegeben, sondern über die Software oder sogar über größere Entfernungen über eine Datenfemwartung veränderbar ist.

Die in der Figur 2 dargestellte Tastatur 9, die auch als Keyboard 9 bezeichnet wird, zeigt in ihrem linken vorderen Bereich den Bildschirm 11, der auch als Keypadbereich bezeichnet wird und gleichzeitig das Touchmodul darstellt. Dieses Modul erlaubt dem Benutzer zusammenhängenden Text, Rechnungsbeleg, Informationen, Anweisungen sowie Einzeltasten mit veränderbarer Größe und Text darzustellen. Der rechte Bereich, der das Tastenfeld 10 darstellt, besitzt den nummerischen Block, der mit fest vorgebbaren Tasten, sowie der Freigabetaste, ausgestattet sein kann. Natürlich ist es erfindungsgemäß ebenso vorstellbar, in das Tastenfeld 10 Tasten 19 mit veränderbaren Anzeigen einzusetzen.

## Patentansprüche

1. Einrichtung zur manuellen Eingabe und/oder Anzeige von Daten, mit einem Gehäuse (15) und einem in dem Gehäuse (15) aufgenommenen berührungssensitiven Bildschirm (11), der mit einer die eingegebenen Daten verarbeitenden Rechnereinheit verbunden ist, **dadurch gekennzeichnet, dass** mindestens ein Bildschirm (11) im Gehäuse (15) aufgenommen und dass der Bildschirm (11) bewegbar im Gehäuse aufgenommen ist.

2. Einrichtung zur manuellen Eingabe nach Anspruch 1, **dadurch gekennzeichnet, dass** der Bildschirm (11) mittels einer Parallelführung (20), insbesondere einer aus einer Doppelschere gebildeten Führungseinrichtung (20), im Gehäuse (15) geführt ist.

3. Einrichtung zur manuellen Eingabe nach einem oder beiden der Ansprüche 1 und 2, **dadurch gekennzeichnet, dass** in der Führungseinrichtung (20) mindestens ein Mittel enthalten ist, das mit einem Schaltelement (21) zusammenwirkt, so dass mittels einer Bewegung des Bildschirms (11) ein Schaltelement (21) kontaktierbar ist.

4. Einrichtung zur manuellen Eingabe nach einem oder mehreren der Ansprüche 1 bis 3, **dadurch gekennzeichnet, dass** die Bewegbarkeit (P) des Bildschirms (11) mittels der Führungseinrichtung (20) sperrbar ist.

5. Einrichtung zur manuellen Eingabe nach einem oder mehreren der Ansprüche 1 bis 4, **dadurch gekennzeichnet, dass** im Gehäuse (15) zusätzlich mindestens ein Tastenfeld (10) enthalten ist.

6. Einrichtung zur manuellen Eingabe nach Anspruch 5, **dadurch gekennzeichnet, dass** die Bewegbarkeit (P) des Bildschirms (11) einen Hub einer Taste (19) des Tastenfeldes (10) entspricht.

7. Einrichtung zur manuellen Eingabe nach einem oder mehreren der Ansprüche 1 bis 6, **dadurch gekennzeichnet, dass** im Gehäuse (15) mindestens ein Magnetkartenleser (18) und/oder mindestens ein Schlüsselschalter (16) und/oder mindestens eine Betriebsartanzeige (17) und/oder mindestens ein Smart Card Reader und/oder mindestens ein Fingerprintsystem enthalten ist.
